# EUROPEAN PATENT APPLICATION

(11) **EP 4 741 091 A1**
(43) Date of publication of application: **13.05.2026**
(21) Application number: 25212027.4
(22) Date of filing: 29.10.2025
(51) Int. Cl.: B23K 9/10, H02M 3/158

(54) **WELDING-TYPE POWER SUPPLIES HAVING BOOST CONVERTER BYPASS CIRCUITRY**

(30) Priority: 31.10.2024 US 202463714324 P; 31.01.2025 US 202563752307 P; 03.10.2025 US 202519349541
(71) Applicant: Illinois Tool Works Inc., Glenview IL 60025 (US)
(72) Inventor: MANTHE, Alan Adam, Glenview, 60025 (US)
(74) Representative: HGF

(57) **Abstract**

Disclosed example welding-type power supplies include: a boost converter circuit configured to increase a DC supply voltage to supply an intermediate voltage to an intermediate DC bus; a buck converter circuit configured to convert the intermediate voltage to output welding-type power; a boost bypass circuit configured to selectively bypass the boost converter circuit; and control circuitry configured to: control the buck converter circuit to convert power from the intermediate DC bus to the welding-type power; in response to determining that a current of the welding-type power is less than a threshold output current, disable the boost bypass circuit and enable the boost converter circuit; and in response to determining that the current of the welding-type power is at least a target current and/or determining that a voltage of the welding-type power is less than a threshold output voltage, control the boost bypass circuit to bypass the boost converter circuit.

## Description

### RELATED APPLICATIONS

The present application claims the benefit of U.S. Provisional Patent Application Serial No. 63/714,324, filed October 31, 2024, entitled "WELDING-TYPE POWER SUPPLIES HAVING BOOST CONVERTER BYPASS CIRCUITRY," and to U.S. Provisional Patent Application Serial No. 63/752,307, filed January 31, 2025, entitled "WELDING-TYPE POWER SUPPLIES HAVING BOOST CONVERTER BYPASS CIRCUITRY." The entireties of U.S. Provisional Patent Application Serial No. 63/714,324 and U.S. Provisional Patent Application Serial No. 63/752,307 expressly incorporated herein by reference.

### FIELD OF THE DISCLOSURE

This disclosure relates generally to welding systems and, more particularly, welding-type power supplies having boost converter bypass circuitry.

### BACKGROUND

Equipment powered by batteries or other energy storage devices are typically provided with a set voltage as an input. However, such equipment often requires one or more different voltages to perform as designed. DC-DC converters may be used to convert DC electrical input from the batteries or other energy storage to the desired voltages.

### SUMMARY

Welding-type power supplies having boost converter bypass circuitry are disclosed, substantially as illustrated by and described in connection with at least one of the figures, as set forth more completely in the claims.

### BRIEF DESCRIPTION OF THE DRAWINGS

FIG. 1 is a block diagram of an example hybrid welding-type system in accordance with aspects of this disclosure.
FIG. 2 is a block diagram of an example battery-powered welding-type system in accordance with aspects of this disclosure.
FIG. 3 is a schematic diagram of an example boost-buck circuit including boost converter bypass circuitry, which may be used to implement the power conversion circuitry of FIGS. 1 and/or 2.
FIG. 4 is a flowchart representative of example machine-readable instructions which may be executed by the control circuitry of FIGS. 1 and/or 2 to control the boost-buck circuit and the boost converter bypass circuitry.

The figures are not necessarily to scale. Wherever appropriate, similar or identical reference numerals are used to refer to similar or identical components.

### DETAILED DESCRIPTION

Conventional battery-powered welding systems utilize DC-DC converters to develop welding type power from a battery source. However, conventional battery-powered welding systems perform control of the DC-DC converters based on disadvantageous methods. For example, the operation of a boost stage of the DC-DC converter in conventional systems is dependent on the output voltage of the boost stage.

Disclosed welding-type power supplies provide improved operation of DC-DC converters, such as boost-buck converters, by determining a difference between a DC supply voltage and the welding-output voltage to determine if there is enough voltage to drive current in the buck converter circuit of the boost-buck converter. In disclosed examples, if it determined that there is insufficient voltage to drive the buck converter based on the DC supply voltage and the welding-type output voltage, the boost converter circuit is enabled. Conversely, the boost converter circuit may be disabled and/or bypassed to improve efficiency when the DC supply voltage and the welding-type output current and/or voltage indicate that the buck converter circuit is capable of supplying the commanded output.

According to aspects of this disclosure, example welding-type power supplies include: a boost converter circuit configured to increase a DC supply voltage to supply an intermediate voltage to an intermediate DC voltage bus; a buck converter circuit configured to convert the intermediate voltage supplied by the intermediate DC voltage bus to output welding-type power; a boost bypass circuit configured to selectively bypass the boost converter circuit by coupling the DC supply voltage to the intermediate DC voltage bus; and control circuitry configured to: control the buck converter circuit to convert power from the intermediate DC voltage bus to the welding-type power; determine a threshold output current; in response to determining that a current of the welding-type power is less than the threshold output current, disable the boost bypass circuit and control the boost converter circuit to enable the boost converter circuit; and in response to at least one of determining that the current of the welding-type power is at least a target welding-type current or determining that a voltage of the welding-type power is less than a threshold output voltage based on the DC supply voltage, control the boost bypass circuit to bypass the boost converter circuit.

In some welding-type power supplies, the boost bypass circuit comprises a switching device configured to selectively couple the DC supply voltage to the intermediate DC voltage bus. In some welding-type power supplies, the control circuitry is configured to control the buck converter circuit to convert power from the intermediate DC voltage bus to the welding-type power based on at least one of a voltage setpoint or a current setpoint. In some welding-type power supplies, the control circuitry is configured to determine the threshold output current based on a difference between a target current of the welding-type power and a predetermined current offset.

In some welding-type power supplies, the control circuitry is configured to wait until the intermediate voltage at the intermediate DC voltage bus has decreased below the DC supply voltage before controlling the boost bypass circuit to bypass the boost converter circuit. In some welding-type power supplies, the control circuitry is configured to determine the threshold output voltage based on a difference between the DC supply voltage and a predetermined voltage offset. In some welding-type power supplies, the welding-type power supply is configured to receive the DC supply voltage from an energy storage device.

In some welding-type power supplies, the control circuitry is configured to disable the boost converter circuit when the boost bypass circuit is controlled to bypass the boost converter circuit. Some welding-type power supplies further include a current sensor configured to measure the current of the welding-type power. Some welding-type power supplies further include a voltage sensor configured to measure the voltage of the welding-type power.

In some welding-type power supplies, the control circuitry is configured to compare the current of the welding-type power to the threshold output current using an analog comparator or an analog-to-digital converter circuit. In some welding-type power supplies, the control circuitry is configured to, while the boost converter circuit is enabled, control the boost converter circuit to operate at at least 95% of an energy capacity of the boost converter circuit.

According to other aspects of this disclosure, example welding-type power supplies include: a boost converter circuit configured to increase a DC supply voltage to supply an intermediate voltage to an intermediate DC voltage bus; a buck converter circuit configured to convert the intermediate voltage supplied by the intermediate DC voltage bus to output welding-type power; a boost bypass circuit configured to selectively bypass the boost converter circuit by coupling the DC supply voltage to the intermediate DC voltage bus; and control circuitry configured to: control the buck converter circuit to convert power from the intermediate DC voltage bus to the welding-type power; determine a threshold output voltage based on the DC supply voltage; in response to determining that a voltage of the welding-type power is greater than the threshold output voltage, control the boost bypass circuit to enable the boost converter circuit; and in response to at least one of determining that the current of the welding-type power is more at least a target welding-type current or determining that the voltage of the welding-type power is less than the threshold output voltage, control the boost bypass circuit to bypass the boost converter circuit.

In some welding-type power supplies, the boost bypass circuit comprises a switching device configured to selectively couple the DC supply voltage to the intermediate DC voltage bus. In some welding-type power supplies, the control circuitry is configured to control the buck converter circuit to convert power from the intermediate DC voltage bus to the welding-type power based on at least one of a voltage setpoint or a current setpoint. In some welding-type power supplies, the control circuitry is configured to determine the threshold output voltage based on reducing a different between the DC supply voltage and a predetermined voltage offset.

In some welding-type power supplies, the control circuitry is configured to wait until the intermediate voltage at the intermediate DC voltage bus has decreased below the DC supply voltage before controlling the boost bypass circuit to bypass the boost converter circuit. In some welding-type power supplies, the welding-type power supply is configured to receive the DC supply voltage from an energy storage device. In some welding-type power supplies, the control circuitry is configured to disable the boost converter circuit when the boost bypass circuit is controlled to bypass the boost converter circuit.

Some welding-type power supplies further include a current sensor configured to measure the current of the welding-type power. Some welding-type power supplies further include a voltage sensor configured to measure the voltage of the welding-type power. Some welding-type power supplies further include a voltage sensor configured to measure the DC supply voltage. In some welding-type power supplies, the control circuitry is configured to compare the voltage of the welding-type power to the threshold output voltage using an analog comparator or an analog-to-digital converter circuit. In some welding-type power supplies, the control circuitry is configured to, while the boost converter circuit is enabled, control the boost converter circuit to operate at at least 95% of an energy capacity of the boost converter circuit.

As used herein, the term "welding-type power" refers to power suitable for welding, plasma cutting, induction heating, CAC-A and/or hot wire welding/preheating (including laser welding and laser cladding). As used herein, the term "welding-type power supply" refers to any device capable of, when power is applied thereto, supplying welding, plasma cutting, induction heating, CAC-A and/or hot wire welding/preheating (including laser welding and laser cladding) power, including but not limited to inverters, converters, resonant power supplies, quasi-resonant power supplies, and the like, as well as control circuitry and other ancillary circuitry associated therewith.

As used herein, a "bidirectional DC-DC converter" refers to any bidirectional circuit topology that converts voltage up and/or down in a first direction and converts voltage up and/or down in a second direction. Example bidirectional DC-DC converters include buck-boost and/or boost-buck topologies, a SEPIC converter, a Ćuk converter, or the like. For example, a bidirectional DC-DC converter may refer to a DC-DC converter that boosts voltage in one direction and bucks voltage in the opposing direction.

As used herein, a "circuit" includes any analog and/or digital components, power and/or control elements, such as a microprocessor, digital signal processor (DSP), software, and the like, discrete and/or integrated components, or portions and/or combinations thereof.

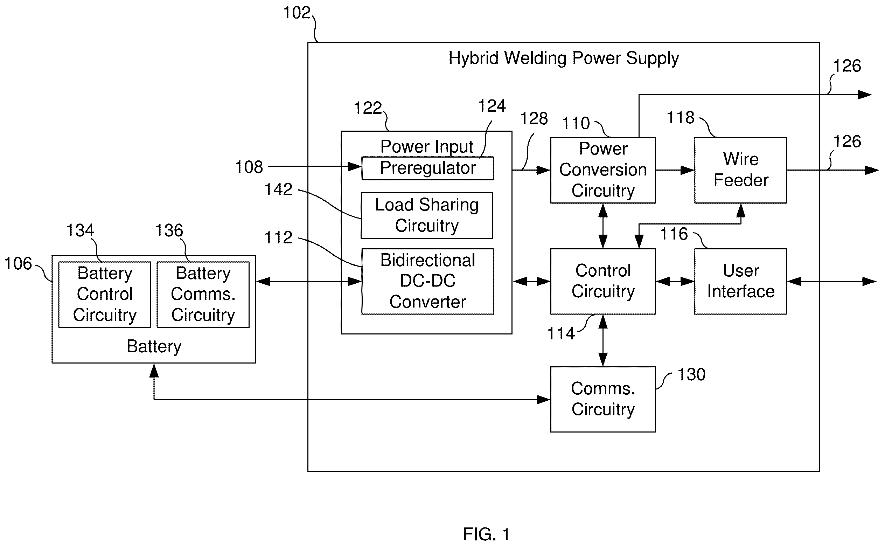

FIG. 1 is a block diagram of an example hybrid welding-type power supply 102. The example hybrid welding-type power supply 102 is connected to one or more batteries 106. The battery 106 may include any type or combination of types of energy storage devices, such as batteries, supercapacitors, thermal energy storage, chemical energy storage, and/or mechanical energy storage devices. While the following examples are discussed with reference to batteries, this disclosure applies to any other type of energy storage that is capable of adaptation for welding.

The hybrid welding-type power supply 102 may also be connected to utility (e.g., AC input) power 108 from a power source such as a generator, a mains power source, a battery-powered inverter supply, and/or any other power source. The hybrid welding-type power supply 102 may be powered by either or both of the battery 106 or the utility power 108 at any given time.

When the hybrid welding-type power supply 102 is connected to both the utility power 108 and to the batteries 106, the hybrid welding-type power supply 102 may charge the batteries 106. Conversely, when energy is required that is not available from the utility power 108, the battery 106 may provide power to the hybrid welding-type power supply 102. In some other examples, the battery 106 is charged separately from the power supply 102 (e.g., via an external charger), and provides power to the power supply 102.

The example hybrid welding-type power supply 102 includes power conversion circuitry 110, a bidirectional DC-DC converter 112, control circuitry 114, a user interface 116, and a wire feeder 118.

The power conversion circuitry 110 is a circuit that converts direct current (DC) power to welding-type output 126. The DC power used by the power conversion circuitry 110 is received from a power input 122. The power input 122 includes a preregulator 124 and/or the bidirectional DC-DC converter 112, and supplies one or more DC buses with energy (e.g., a DC bus 128). The preregulator 124 may include a rectifier to rectify the AC input from the utility power 108. The preregulator 124 further includes circuitry to convert the rectified AC input to the bus voltage for providing power to the power conversion circuitry 110.

In some examples, the power input 122 includes load sharing circuitry 142, multiple converters, and/or multi-stage converters, to supply the DC bus 128 with energy from multiple batteries or other energy storage devices. In some examples, the power input 122 may accept energy from different types of batteries simultaneously in addition to accepting energy from multiple batteries of the same type.

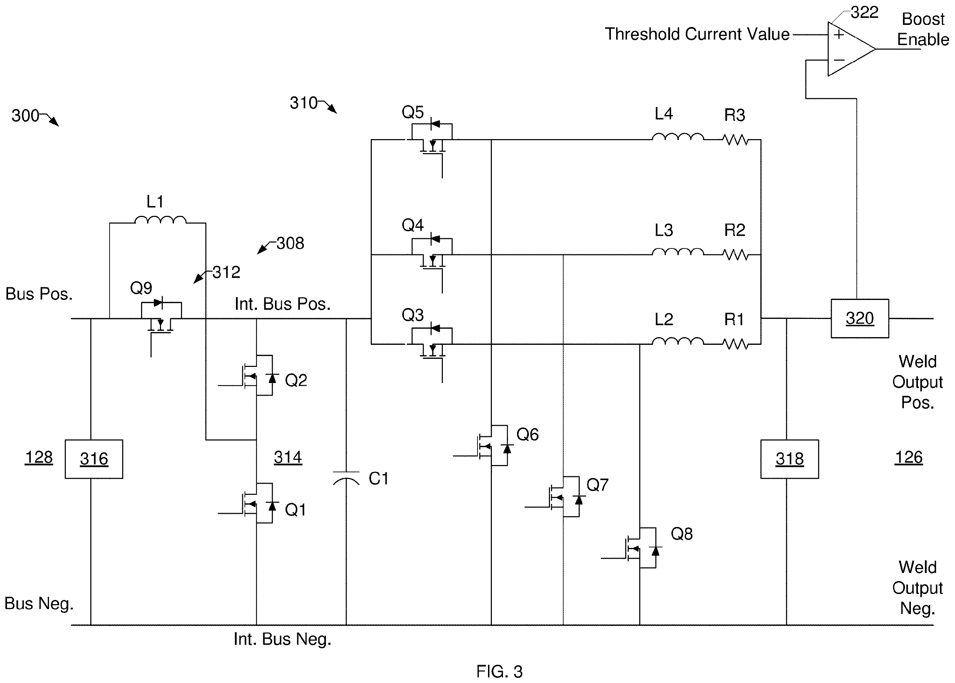

The power conversion circuitry 110 converts the energy present at the DC bus 128 (e.g., from the power input 122) to a welding-type output 126. For example, the power conversion circuitry 110 may include a boost-buck circuit, which is controlled by the control circuitry 114 based on specified weld parameters and feedback. An example implementation of the power conversion circuitry 110 is disclosed below with reference to FIG. 3.

The bidirectional DC-DC converter 112 is a circuit that converts input power (e.g., from the DC bus 128 powered by the utility power 108) to charge the batteries 106. The bidirectional DC-DC converter 112 also converts the stored power in the batteries 106 to converted power to output to the power conversion circuitry 110 (e.g., via one or more DC buses 128) for output to the power conversion circuitry 110. In other examples, the bidirectional DC-DC converter 112 is replaced with separate converters (e.g., a buck converter and a boost converter) to charge the battery 106 and to discharge the battery 106.

The control circuitry 114 may include a processor or other logic circuitry. The control circuitry 114 may include any general-purpose central processing unit (CPU), embedded processing system, or system-on-chip from any manufacturer. In some other examples, the control circuitry 114 may include one or more specialized processing units, such as graphic processing units and/or digital signal processors. The control circuitry 114 executes machine-readable instructions that may be stored locally at the processor (e.g., in an included cache), in a random-access memory (or other volatile memory), in a read only memory (or other non-volatile memory such as FLASH memory), and/or in a mass storage device. Example mass storage devices may be a hard drive, a solid-state storage drive, a hybrid drive, a RAID array, and/or any other mass data storage device.

The control circuitry 114 controls the power conversion circuitry 110 to output the welding-type output 126. The control circuitry 114 controls the bidirectional DC-DC converter 112 to convert power from the power input 122 to charge the batteries 106 and/or controls the bidirectional DC-DC converter 112 to convert power from the batteries 106 to provide the converted battery power to the power conversion circuitry 110. The control circuitry 114 further controls the bidirectional DC-DC converter 112 to charge the batteries 106 when the utility power 108 is available and at least a portion of the utility power 108 is available for charging the batteries 106 (e.g., the utility power 108 is not completely consumed by the power conversion circuitry 110 and/or the wire feeder 118). Conversely, the control circuitry 114 controls the bidirectional DC-DC converter 112 to convert power from the batteries 106 to provide the converted battery power to the power conversion circuitry 110 when a demand for welding power is higher than can be provided by the utility power 108, and/or when the utility power 108 is unavailable.

The example wire feeder 118 includes a wire feed motor to provide electrode wire to the welding operation (e.g., when the welding operation involves a wire feeder, such as when gas metal arc welding, flux cored arc welding, etc.). When the welding operation involves a wire feeder, the control circuitry 114 controls powers the wire feeder 118. The wire feeder 118 may be powered by the welding-type output 126 or by another output from the power conversion circuitry 110. In some other examples, the wire feeder 118 may be a separate device connected to the welding-type output 126 external to the hybrid welding-type power supply 102.

The user interface 116 enables input to the hybrid welding-type power supply 102 and/or output from the hybrid welding-type power supply 102 to a user. The control circuitry 114 may indicate the state of charge of the batteries 106 and/or a mode of operation, such as a battery charging mode, an external power welding mode (e.g., welding mode powered by utility power), a combination welding-charging mode (e.g., welding and charging the batteries 106 using utility power 108), a battery powered welding mode, or a hybrid welding mode (e.g., welding boost mode powered by utility power and battery power), of the hybrid welding-type power supply 102 via the user interface 116.

The user interface 116 further includes inputs to allow an operator to specify welding parameters, such as a workpiece thickness, output voltage, output current, wire feed speed, welding wire diameter, welding wire type, welding process, pulse frequency, pulse magnitude, and/or any other desired welding parameter values.

The example control circuitry 114 monitors the properties of the battery 106 and/or utility power 108 to provide information about the batteries, utility power, and welding capacity to the operator. For example, as the power available to the power input 122 from the batteries 106 increases, the control circuitry 114 may determine that thicker materials can be welded, a longer time, length, and/or number of welds of a given length are available to weld for a given set of parameters, use of the utility power 108 can be decreased, the types of usable weld processes increases, the usable consumable sizes (e.g., electrode diameters) increase, and/or other enhancements and/or augmentations to welding may become available. Conversely, as the power available from the batteries 106 decreases, the control circuitry 114 may determine that the thickness of materials that can be welded decreases, less time is available to weld for a given set of parameters, more utility power 108 may be needed, the types of usable weld processes are limited, the usable consumable sizes (e.g., electrode diameters) decrease, and/or the hybrid welding-type power supply 102 becomes otherwise limited.

The control circuitry 114 receives and uses properties of the batteries 106 to determine welding capacity, supported values for welding parameters, and/or alternatives to unsupported values for welding parameters. To determine the properties of the batteries 106, the example hybrid welding-type power supply 102 includes communications circuitry 130. The example communications circuitry 130 may include a network interface and/or an I/O interface. An example network interface includes hardware, firmware, and/or software to connect the communications circuitry 130 to a communications network such as the Internet. For example, the network interface of the communications circuitry 130 may include IEEE 802.X-compliant wireless and/or wired communications hardware for transmitting and/or receiving communications. An example I/O interface includes hardware, firmware, and/or software to connect one or more I/O devices to the control circuitry 114 for providing input to the control circuitry 114 and/or providing output from the control circuitry 114. For example, the I/O interface may include a graphics processing unit for interfacing with a display device, a universal serial bus port for interfacing with one or more USB-compliant devices, a FireWire, a field bus, and/or any other type of interface. Example I/O device(s) may include a keyboard, a keypad, a mouse, a trackball, a pointing device, a microphone, an audio speaker, a display device, an optical media drive, a multi-touch touch screen, a gesture recognition interface, a magnetic media drive, and/or any other type of input and/or output device. The example control circuitry 114 may access a non-transitory machine-readable medium via the I/O interface and/or the I/O device(s). Examples of a machine-readable medium include optical discs (e.g., compact discs (CDs), digital versatile/video discs (DVDs), Blu-ray discs, etc.), magnetic media (e.g., floppy disks), portable storage media (e.g., portable flash drives, secure digital (SD) cards, etc.), and/or any other type of removable and/or installed machine-readable media.

Some types of batteries 106 include battery control circuitry 134 (e.g., a battery management system) and/or battery communications circuitry 136. For example, battery control circuitry 134 may control charging and discharging of individual cells of the battery 106, control internal load balancing between cells of the battery 106, and/or store information about charging and/or discharging of the battery 106 and/or battery communications circuitry 136 may allow for communication of battery information to external devices and/or implement control of one or more aspects of the battery 106 by an external device. The example battery communications circuitry 136 of the battery 106 and/or the communications circuitry 130 of the hybrid welding-type power supply 102 may be configured to communicate through any wired or wireless techniques. For example, the battery communications circuitry 136 and/or the communications circuitry 130 may communicate via serial communications through the battery contacts. In other examples, the battery communications circuitry 136 and/or the communications circuitry 130 may communicate wirelessly via radio frequency identification (RFID), near field communications (NFC), Bluetooth^{®}, and/or any other close-proximity communications, or any other desired wireless communications technique.

The battery control circuitry 134 and the battery communications circuitry 136 communicate to the welding-type power supply 102 the voltage, current, overvoltage threshold, undervoltage threshold, temperature, discharge maximum temperature, discharge recovery temperature, usage history, and/or other information about the battery 106. For example, the battery control circuitry 134 may monitor and store battery usage data, such as battery charging history and/or battery discharging history. The battery usage data may include an average discharge rate of the battery, a total time during which a discharge rate of the battery is at least a threshold discharge rate, a peak energy discharge, and/or an ambient temperature during use of the battery.

The example power input 122 may further include load sharing circuitry 142. The load sharing circuitry 142 controls a balance of power input from the utility power 108 and the battery 106. For example, the control circuitry 114 may control the load sharing circuitry 142 to cause relatively more power to be drawn from the utility power 108 to preserve battery life and/or avoid unnecessary battery discharge. The control circuitry 114 may also control the load sharing circuitry 142 to cause relatively more power to be drawn from the battery 106, such as to reduce high electricity costs and/or save fuel when utility power 108 is powered by an engine-driven (or other portable fuel-driven) source.

In some examples, the user interface 116 may provide a utility power selection input that defines different levels of power to be drawn from the utility power 108 (e.g., with the balance drawn from the battery 106). Example utility power levels may include a low utility draw level (e.g., limit utility drawn to only levels necessary to sustain the welding), a medium utility draw level, and a high utility draw level (e.g., limit power drawn from the battery 106).

In some examples, the control circuitry 114 communicates with the battery 106 via the battery communications circuitry 136 to determine whether the battery 106 is a recognized battery unit. For example, the power supply 102 may be configured to operate with certain types of battery packs having specific characteristics. The control circuitry 114 may communicate with the battery control circuitry 134 in the battery 106 via the battery communications circuitry 136 to identify the type of battery pack and, if a type of battery pack is identified, determine whether the identified type is recognized. A battery 106 may be recognized by being authorized, approved, included in a list of battery packs accessible by the control circuitry 114, and/or through any other method of recognition or identification of the battery 106 as suitable.

When the control circuitry 114 detects that the battery 106 is recognized, the control circuitry 114 may control the bidirectional DC-DC converter 112 to charge the battery 106 based on one or more predetermined properties of the battery 106 (e.g., charge state, energy storage capacity, etc.). The control circuitry 114 may also control the bidirectional DC-DC converter 112 to convert power from the battery 106 based on the one or more characteristics of the authorized battery unit to provide the converted power to the power conversion circuitry 110. The control circuitry 114 may, in some examples, control the power conversion circuitry 110 to limit the welding power based on the one or more characteristics of the battery 106.

Conversely, if the control circuitry 114 does not identify the battery 106 as a recognized battery, the control circuitry 114 may enable welding without use of the battery 106, (e.g., control the bidirectional DC-DC converter 112 so as to disable converting power from the battery 106), disable the bidirectional DC-DC converter 112 (e.g., prevent the bidirectional DC-DC converter 112 from charging or discharging the battery 106), and/or display a notification via the user interface 116. The notification may be a simple LED, a text-based message, an image displayed via the display device, an audible alert, and/or any other type of notification.

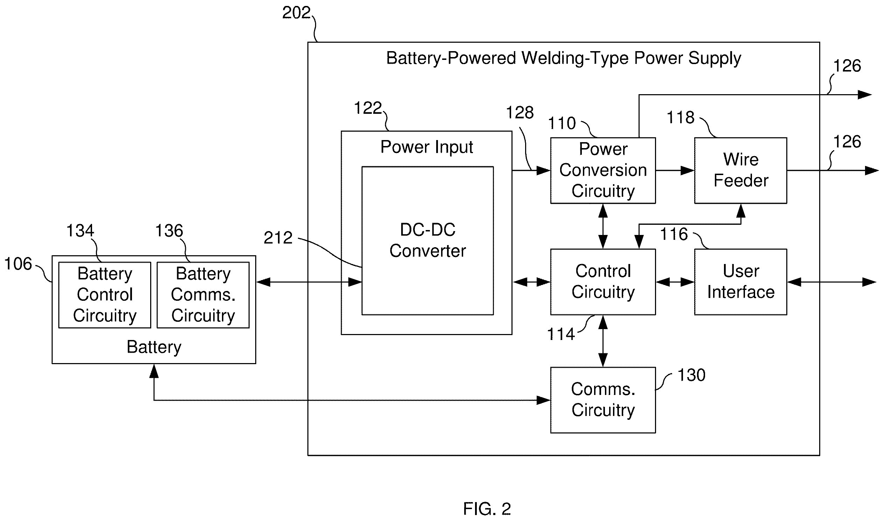

FIG. 2 is a block diagram of a battery-powered welding-type power supply 202. The example battery-powered welding-type power supply 202 is similar to the hybrid welding-type power supply 102 of FIG. 1. The battery-powered welding-type power supply 202 is similar to the hybrid welding-type power supply 102 of FIG. 1, with the exception that the battery-powered welding-type power supply 202 is powered solely by the battery 106 and does not have an input for utility power 108. Accordingly, the example battery-powered welding-type power supply 202 includes a unidirectional DC-DC converter 212 to convert power from the battery 106 to supply the power conversion circuitry 110.

The battery-powered welding-type power supply 202 similarly includes the power conversion circuitry 110, the control circuitry 114, the user interface 116, the wire feeder 118, the power input 122, the DC bus 128, and the communications circuitry 130, as described above with reference to FIG. 1.

Instead of being connected to external batteries, the example power supplies 102, 202 may use removable batteries and/or integrated batteries.

FIG. 3 is a schematic diagram of an example boost-buck converter 300 including boost converter bypass circuitry, which may be used to implement the power conversion circuitry 110 of FIGS. 1 and/or 2. An input of the example boost-buck converter 300 is coupled to the DC bus 128, and an output of the boost-buck circuit 306 outputs the welding-type output 126.

The example boost-buck circuit includes a boost converter circuit 308, a buck converter circuit 310, and a boost bypass circuit 312.

The example boost converter circuit 308 converts increase a DC supply voltage from the DC bus 128 to supply an intermediate voltage to an intermediate DC voltage bus 314. The example boost converter circuit 308 includes an inductor L1 and a switching device Q1 to increase the voltage of the DC bus 128 to supply the intermediate voltage. The example boost converter circuit 308 may further include a second switching device Q2 to provide synchronous rectification, or may include another type of rectifier.

The example buck converter circuit 310 converts the intermediate voltage supplied by the intermediate DC voltage bus 314 to output the welding-type output 126. The example buck converter circuit 310 is a multi-phase converter (e.g., a three-phase interleaved converter) to reduce voltage ripple. In the illustrated example, the buck converter circuit 310 includes switching devices Q3, Q4, and Q5, inductors L2, L3, and L4, and resistors R1, R2, and R3. The example buck converter circuit 310 may further include switching devices Q6, Q7, and Q8 to provide synchronous rectification, or may include another type of rectifier.

The boost bypass circuit 312 is controlled to selectively bypass the boost converter circuit 308 by coupling the DC supply voltage at the DC bus 128 to the intermediate DC voltage bus 314 (e.g., to the input of the buck converter circuit 310). The example boost bypass circuit 312 includes a switching device Q9 which can be turned on (e.g., closed switch) to directly connect the DC bus 128 to the intermediate DC voltage bus 314, or turned off (e.g., open switch) to disable (e.g., disconnect) the boost bypass. The switching device Q9 also blocks current from backflowing to the power source when the boost converter circuit 308 is operating.

The control circuitry 114 is coupled to the switching devices Q1-Q9 to control operation of the boost converter circuit 308, the buck converter circuit 310, and the boost bypass circuit 312. For example, the control circuitry 114 controls the buck converter circuit 310 (e.g., via the switching devices Q3-Q8) to convert power from the intermediate DC voltage bus 314 to the welding-type output 126. For example, the control circuitry 114 controls the buck converter circuit 310 controls the switching devices Q3-Q8 to reduce the voltage from the intermediate DC voltage bus 314 to the welding-type output 126 in accordance with a voltage setpoint, current setpoint, and/or other parameters of the welding-type power demanded by the welding-type operation.

The example control circuitry 114 monitors the voltage of the DC bus 128 and the voltage of the welding-type output 126 to determine whether to bypass the boost converter circuit 308 via the boost bypass circuit 312 and disable the boost converter circuit 308, or to disable the bypass and enable the boost converter circuit 308. For example, a first voltage sensor 316 measures the voltage at the DC bus 128 and a second voltage sensor 318 measures the voltage at the welding-type output 126, and measurements from the voltage sensors 316, 318 are provided to the control circuitry 114. A current sensor 320 measures a current of the welding-type output 126 and provides current measurements to the control circuitry 114.

The control circuitry 114 may compare the current of the welding-type output 126 (e.g., measurements from the current sensor 320) to a threshold output current. In the example of FIG. 3, the control circuitry 114 includes a comparator 322 to compare the current measurement (e.g., via a sense resistor) to a threshold current value representative of the threshold output current. The example comparator 322 is an analog comparator circuit to reduce a response time between changes in the output current and control of the boost converter circuit 308. In other examples, the comparator 322 may be implemented using an analog to digital converter (ADC) and digital logic circuitry.

The threshold output current may be determined by the control circuitry 114 based on a target welding-type current, such as equal to the target welding-type current, proportional to the welding-type current, or offset from the welding-type current. The control circuitry 114 may determine the threshold output current based on a difference between a target current of the welding-type power and a predetermined current offset. For example the threshold output current may be set to be approximately 5A less than the target welding-type current or, if the target welding-type current is less than a target threshold (e.g., less than 20A), the threshold output current may be set to a smaller offset (e.g., 2A less than the target welding-type current) or set to a fixed threshold output current (e.g., 10A).

In response to determining that the current of the welding-type output 126 is less than the threshold output current, the control circuitry 114 may disable the boost bypass circuit 312 (e.g., control the switching device Q9 to be open) and enable or control the boost converter circuit 308 to increase the DC supply voltage of the DC bus 128 to provide an intermediate voltage at the intermediate bus 314. As used herein, disabling the boost bypass circuit 312 refers to not bypassing the boost converter circuit 308, such as by opening the connection between the DC bus 128 and the intermediate bus 314.

In the example of FIG. 3, the control circuitry 114 controls the boost converter circuit 308 to operate at or near full energy capacity (e.g., at least 95% of full energy capacity, or at least 90% of full energy capacity) for an initial period after the boost converter circuit 308 is enabled. The initial period may last until the intermediate voltage at the intermediate bus 314 satisfies a predetermined threshold voltage (e.g., a target intermediate voltage). The energy capacity of the boost converter circuit 308 may be determined by the energy storage capacity of the boost converter 308 (e.g., inductance of the inductor L1) and/or energy storage capacity at an output of the boost converter 308 (e.g., capacitance of bus capacitor(s) C1). By operating the boost converter circuit 308 at or near full energy capacity for the initial period, the intermediate voltage increases at or near the highest rate, and reduces the energy storage capacity required by the boost-buck converter 300 to operate at a rated output. After the initial period, the control circuitry 114 operates the boost converter circuit 308 based on the output load (e.g., to provide an intermediate voltage within a threshold range), which may result in using less than the full energy capacity of the boost converter circuit 308. If the output load is greater than the energy capacity of the boost converter 308, the intermediate voltage may not reach the predetermined threshold voltage, and the control circuitry 114 continues to operate the boost converter 114 at or near the full energy capacity of the boost converter 308 until the output load decreases and the intermediate voltage reaches the predetermined threshold voltage.

Additionally or alternatively, the control circuitry 114 may disable the boost bypass circuit 312, and enable or control the boost converter circuit 308, in response to comparing the output voltage of the welding-type output 126 to a threshold output voltage, in which the threshold output voltage is based on the DC supply voltage of the DC bus 128. For example, the threshold output voltage may be selected to be equal to the DC supply voltage of the DC bus 128, proportional to the DC supply voltage of the DC bus 128, or offset from the DC supply voltage of the DC bus 128. In the illustrated example, the threshold output voltage may be set to 5V less than the voltage of the DC bus 128, but another offset may be selected. When the output voltage of the welding-type output 126 is too close to the DC supply voltage at the DC bus 128, the buck converter circuit 310 becomes incapable of increasing the current enough to supply the target output current. Accordingly, the control circuitry 114 controls the boost converter circuit 308 to increase the intermediate voltage of the intermediate bus 314 when the output voltage is too close to the DC supply voltage at the DC bus 128. By enabling the boost converter circuit 308 and creating a higher voltage at the intermediate bus 314, the example boost-buck converter 300 increases the current in the output inductors L2-L4 and, thus, the weld current, to both stabilize the arc and reduce or prevent arc outages.

Conversely, the example control circuitry 114 disables or turns off the boost converter circuit 308, and enables the boost bypass circuit 312, in response to determining that 1) the current of the welding-type output 126 is at least the target welding-type current and/or 2) the voltage of the welding-type output 126 is less than the threshold output voltage based on the DC supply voltage at the DC bus 128. For example, if the current measured by the current sensor 320 is at least equal to the target welding-type current (e.g., a current setpoint), the control circuitry 114 disables or turns off the boost converter circuit 308, and enables the boost bypass circuit 312. Additionally or alternatively, if the voltage of the welding-type output 126 is less than the threshold output voltage based on the DC supply voltage at the DC bus 128 (e.g., the DC supply voltage is greater than the voltage of the welding-type output 126 by at least a predetermined amount), the buck converter circuit 310 would be expected to be able to deliver the demanded current to the welding-type output 126.

In some examples, the control circuitry 114 allows the intermediate voltage at the intermediate bus 314 to decrease below the DC supply voltage at the DC bus 128 prior to enabling the boost bypass circuit 312. By waiting to enable the boost bypass circuit 312 until the intermediate voltage is less than the DC supply voltage, the control circuitry 114 avoids back feeding the input power source, such as the battery 106, using energy stored in the buck converter circuit 310. Alternatively, the control circuitry 114 may wait a predetermined time period, based on an assumed period of time for the intermediate voltage at the intermediate bus 314 to decrease below the DC supply voltage at the DC bus 128, prior to enabling the boost bypass circuit 312.

In some other examples, the control circuitry 114 may monitor the duty cycles of the switching devices Q3-Q5 of the buck converter circuit 310, and enable the boost converter circuit 308 when the combined duty cycles of the switching devices Q3-Q5 are being operated at or near full pulse width. In such examples, it is assumed that if the combined duty cycles of the switching devices Q3-Q5 are near full pulse width, then there is a small difference between the DC supply voltage at the DC bus 128 and the voltage of the welding-type output 126. In such examples, when the boost converter circuit 308 is enabled, then the duty of the buck converter circuit 310 will naturally be lowered, and a different method than the duty cycle (e.g., the methods disclosed above) would be used to determine when to disable the boost.

In some other examples, the control circuitry 114 may use a default DC supply voltage instead of measuring the DC supply voltage with the voltage sensor 316. In such examples, if the control circuitry 114 detects that the voltage of the welding-type output 126 (e.g., measured by the voltage sensor 318) increases above a threshold (e.g., 35V), the control circuitry 114 may determine that an arc outage is imminent and control the converter circuit 308 to increase the DC supply voltage to supply the intermediate bus 314 to avoid the arc outage.

In some examples, the current of the welding-type output 126 may be compared to a predetermined current capacity of the boost converter circuit 308. If the current of the welding-type output 126 exceeds a corresponding capacity of the boost converter circuit 308, the example control circuitry 114 may identify an error condition and stop operation of the boost-buck converter 300.

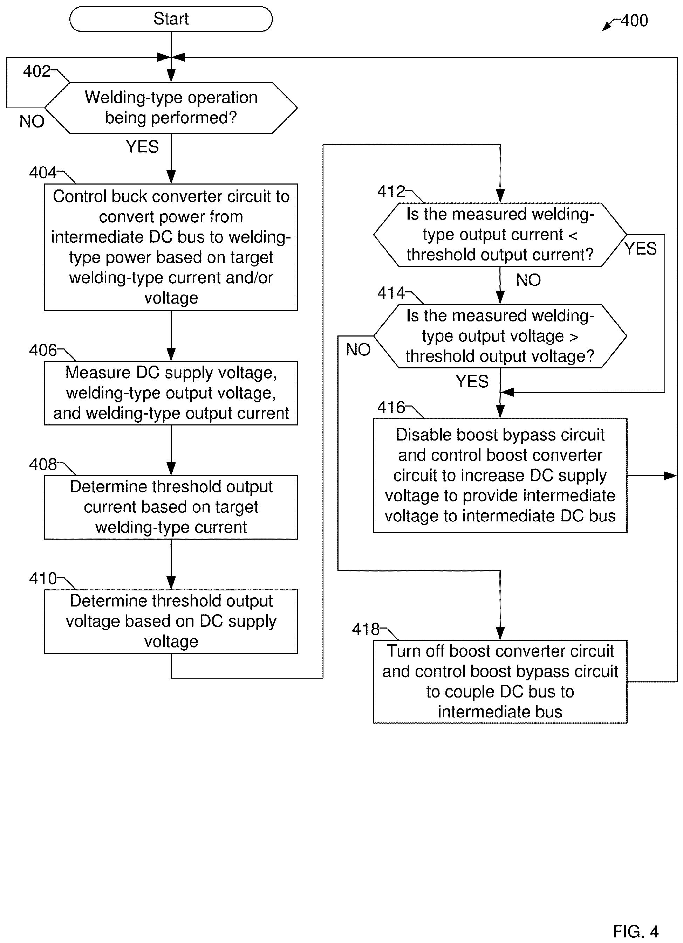

FIG. 4 is a flowchart representative of example machine-readable instructions 400 which may be executed by the control circuitry 114 of FIGS. 1 and/or 2 to control the boost-buck converter 300 and the boost bypass circuit 312.

At block 402, the control circuitry 114 determines whether a welding-type operation is being performed. For example, the control circuitry 114 may determine whether a weld circuit is established and/or whether welding-type current is being demanded by the welding-type output. If a welding-type operation is not being performed (block 402), control iterates to block 402 to await a welding-type operation.

If a welding-type operation is not being performed (block 402), at block 404 the control circuitry 114 controls the buck converter circuit 310 to convert power from the intermediate DC voltage bus 314 to welding-type power (e.g., at the welding-type output 126). For example, the control circuitry 114 may control the switching devices Q3-Q8 based on a setpoint voltage, a setpoint current, or other parameters and/or feedback.

At block 406, the voltage sensor 316 measures the DC supply voltage, the voltage sensor 318 measures the voltage of the welding-type output 126, and the current sensor 320 measures the current of the welding-type output 126.

At block 408, the control circuitry 114 determines the threshold output current based on the target welding-type current. The threshold output current may be determined based on a target welding-type current, such as equal to the target welding-type current, proportional to the welding-type current, or offset from the welding-type current.

At block 410, the control circuitry 114 determines the threshold output voltage based on the DC supply voltage. The threshold output voltage may be selected to be equal to the DC supply voltage of the DC bus 128, proportional to the DC supply voltage of the DC bus 128, or offset from the DC supply voltage of the DC bus 128.

At block 412, the control circuitry 114 determines whether the measured welding-type output current is less than the threshold output current. For example, if the measured welding-type output current is less than the threshold output current, the buck converter circuit 310 may require a higher input voltage (e.g., the intermediate voltage at the intermediate bus 314) to provide the target output current. If the measured welding-type output current is not less than the threshold output current (block 412), at block 414 the control circuitry 114 determines whether the measured welding-type output voltage is greater than the threshold output voltage. For example, if the measured welding-type output voltage is greater than the threshold output voltage, the voltage across the inductors L2-L4 may not be sufficient to increase the current.

If the measured welding-type output voltage is greater than the threshold output voltage (block 414), or if the measured welding-type output current is less than the threshold output current (block 412), at block 416 the control circuitry 114 disables the boost bypass circuit 312 and controls the boost converter circuit 308 to increase the DC supply voltage to provide a higher intermediate voltage to the intermediate DC bus 314. In the example of FIG. 3, the control circuitry 114 controls the boost converter circuit 308 to operate at or near full energy capacity (e.g., at least 95% of full energy capacity, or at least 90% of full energy capacity) while the boost converter circuit 308 is enabled. By operating the boost converter circuit 308 at or near full energy capacity, the intermediate voltage increases at or near the highest rate, and reduces the energy storage capacity required by the boost-buck converter 300 to operate at a rated output. Control then returns to block 402.

If the measured welding-type output voltage is not greater than the threshold output voltage (block 414), and the measured welding-type output current is not less than the threshold output current (block 412), at block 418 the control circuitry 114 turns off the boost converter circuit 308 and controls the boost bypass circuit 312 (e.g., the switching device Q9) to couple the DC bus 128 to the intermediate bus 314. Control then returns to block 402.

The present methods and systems may be realized in hardware, software, and/or a combination of hardware and software. Example implementations include an application specific integrated circuit and/or a programmable control circuit.

As utilized herein the terms "circuits" and "circuitry" refer to physical electronic components (i.e. hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, "and/or" means any one or more of the items in the list joined by "and/or". As an example, "x and/or y" means any element of the three-element set {(x), (y), (x, y)}. In other words, "x and/ory" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "e.g.," and "for example" set off lists of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled or not enabled (e.g., by a user-configurable setting, factory trim, etc.).

While the present method and/or system has been described with reference to certain implementations, it will be understood by those skilled in the art that various changes may be made and equivalents may be substituted without departing from the scope of the present method and/or system. For example, block and/or components of disclosed examples may be combined, divided, re-arranged, and/or otherwise modified. In addition, many modifications may be made to adapt a particular situation or material to the teachings of the present disclosure without departing from its scope. Therefore, the present method and/or system are not limited to the particular implementations disclosed. Instead, the present method and/or system will include all implementations falling within the scope of the appended claims, both literally and under the doctrine of equivalents.

Certain embodiments of the invention are described in the following clauses:
Clause 1. A welding-type power supply, comprising:
   a boost converter circuit configured to increase a DC supply voltage to supply an intermediate voltage to an intermediate DC voltage bus;
   a buck converter circuit configured to convert the intermediate voltage supplied by the intermediate DC voltage bus to output welding-type power;
   a boost bypass circuit configured to selectively bypass the boost converter circuit by coupling the DC supply voltage to the intermediate DC voltage bus; and
   control circuitry configured to:
      control the buck converter circuit to convert power from the intermediate DC voltage bus to the welding-type power;
      determine a threshold output current;
      in response to determining that a current of the welding-type power is less than the threshold output current, disable the boost bypass circuit and control the boost converter circuit to enable the boost converter circuit; and
      in response to at least one of determining that the current of the welding-type power is at least a target welding-type current or determining that a voltage of the welding-type
      power is less than a threshold output voltage based on the DC supply voltage, control the boost bypass circuit to bypass the boost converter circuit.
Clause 2. The welding-type power supply as defined in clause 1, wherein the boost bypass circuit comprises a switching device configured to selectively couple the DC supply voltage to the intermediate DC voltage bus.
Clause 3. The welding-type power supply as defined in clause 1, wherein the control circuitry is configured to control the buck converter circuit to convert power from the intermediate DC voltage bus to the welding-type power based on at least one of a voltage setpoint or a current setpoint.
Clause 4. The welding-type power supply as defined in clause 1, wherein the control circuitry is configured to determine the threshold output current based on a difference between a target current of the welding-type power and a predetermined current offset.
Clause 5. The welding-type power supply as defined in clause 1, wherein the control circuitry is configured to wait until the intermediate voltage at the intermediate DC voltage bus has decreased below the DC supply voltage before controlling the boost bypass circuit to bypass the boost converter circuit.
Clause 6. The welding-type power supply as defined in clause 1, wherein the control circuitry is configured to determine the threshold output voltage based on a difference between the DC supply voltage and a predetermined voltage offset.
Clause 7. The welding-type power supply as defined in clause 1, wherein the welding-type power supply is configured to receive the DC supply voltage from an energy storage device.
Clause 8. The welding-type power supply as defined in clause 1, wherein the control circuitry is configured to disable the boost converter circuit when the boost bypass circuit is controlled to bypass the boost converter circuit.
Clause 9. The welding-type power supply as defined in clause 1, further comprising a current sensor configured to measure the current of the welding-type power.
Clause 10. The welding-type power supply as defined in clause 1, further comprising a voltage sensor configured to measure the voltage of the welding-type power.
Clause 11. The welding-type power supply as defined in clause 1, wherein the control circuitry is configured to compare the current of the welding-type power to the threshold output current using an analog comparator or an analog-to-digital converter circuit.
Clause 12. The welding-type power supply as defined in clause 1, wherein the control circuitry is configured to, while the boost converter circuit is enabled, control the boost converter circuit to operate at at least 95% of an energy capacity of the boost converter circuit.
Clause 13. A welding-type power supply, comprising:
   a boost converter circuit configured to increase a DC supply voltage to supply an intermediate voltage to an intermediate DC voltage bus;
   a buck converter circuit configured to convert the intermediate voltage supplied by the intermediate DC voltage bus to output welding-type power;
   a boost bypass circuit configured to selectively bypass the boost converter circuit by coupling the DC supply voltage to the intermediate DC voltage bus; and
   control circuitry configured to:
      control the buck converter circuit to convert power from the intermediate DC voltage bus to the welding-type power;
      determine a threshold output voltage based on the DC supply voltage;
      in response to determining that a voltage of the welding-type power is greater than the threshold output voltage, control the boost bypass circuit to enable the boost converter circuit; and
      in response to at least one of determining that the current of the welding-type power is more at least a target welding-type current or determining that the voltage of the welding-type power is less than the threshold output voltage, control the boost bypass circuit to bypass the boost converter circuit.
Clause 14. The welding-type power supply as defined in clause 13, wherein the boost bypass circuit comprises a switching device configured to selectively couple the DC supply voltage to the intermediate DC voltage bus.
Clause 15. The welding-type power supply as defined in clause 13, wherein the control circuitry is configured to control the buck converter circuit to convert power from the intermediate DC voltage bus to the welding-type power based on at least one of a voltage setpoint or a current setpoint.
Clause 16. The welding-type power supply as defined in clause 13, wherein the control circuitry is configured to determine the threshold output voltage based on reducing a different between the DC supply voltage and a predetermined voltage offset.
Clause 17. The welding-type power supply as defined in clause 13, wherein the control circuitry is configured to wait until the intermediate voltage at the intermediate DC voltage bus has decreased below the DC supply voltage before controlling the boost bypass circuit to bypass the boost converter circuit.
Clause 18. The welding-type power supply as defined in clause 13, wherein the welding-type power supply is configured to receive the DC supply voltage from an energy storage device.
Clause 19. The welding-type power supply as defined in clause 13, wherein the control circuitry is configured to disable the boost converter circuit when the boost bypass circuit is controlled to bypass the boost converter circuit.
Clause 20. The welding-type power supply as defined in clause 13, further comprising a current sensor configured to measure the current of the welding-type power.
Clause 21. The welding-type power supply as defined in clause 13, further comprising a voltage sensor configured to measure the voltage of the welding-type power.
Clause 22. The welding-type power supply as defined in clause 13, further comprising a voltage sensor configured to measure the DC supply voltage.
Clause 23. The welding-type power supply as defined in clause 13, wherein the control circuitry is configured to compare the voltage of the welding-type power to the threshold output voltage using an analog comparator or an analog-to-digital converter circuit.
Clause 24. The welding-type power supply as defined in clause 13, wherein the control circuitry is configured to, while the boost converter circuit is enabled, control the boost converter circuit to operate at at least 95% of an energy capacity of the boost converter circuit.

## Claims

1. A welding-type power supply, comprising:
a boost converter circuit configured to increase a DC supply voltage to supply an intermediate voltage to an intermediate DC voltage bus;
a buck converter circuit configured to convert the intermediate voltage supplied by the intermediate DC voltage bus to output welding-type power;
a boost bypass circuit configured to selectively bypass the boost converter circuit by coupling the DC supply voltage to the intermediate DC voltage bus; and
control circuitry configured to:
control the buck converter circuit to convert power from the intermediate DC voltage bus to the welding-type power;
determine a threshold output current;
in response to determining that a current of the welding-type power is less than the threshold output current, disable the boost bypass circuit and control the boost converter circuit to enable the boost converter circuit; and
in response to at least one of determining that the current of the welding-type power is at least a target welding-type current or determining that a voltage of the welding-type power is less than a threshold output voltage based on the DC supply voltage, control the boost bypass circuit to bypass the boost converter circuit.

2. The welding-type power supply as defined in claim 1, wherein the boost bypass circuit comprises a switching device configured to selectively couple the DC supply voltage to the intermediate DC voltage bus.

3. The welding-type power supply as defined in claim 1, wherein the control circuitry is configured to control the buck converter circuit to convert power from the intermediate DC voltage bus to the welding-type power based on at least one of a voltage setpoint or a current setpoint;
or wherein the control circuitry is configured to determine the threshold output current based on a difference between a target current of the welding-type power and a predetermined current offset;
or wherein the control circuitry is configured to wait until the intermediate voltage at the intermediate DC voltage bus has decreased below the DC supply voltage before controlling the boost bypass circuit to bypass the boost converter circuit,
or wherein the control circuitry is configured to determine the threshold output voltage based on a difference between the DC supply voltage and a predetermined voltage offset.

4. The welding-type power supply as defined in claim 1, wherein the welding-type power supply is configured to receive the DC supply voltage from an energy storage device or
wherein the control circuitry is configured to disable the boost converter circuit when the boost bypass circuit is controlled to bypass the boost converter circuit.

5. The welding-type power supply as defined in claim 1, further comprising a current sensor configured to measure the current of the welding-type power or
further comprising a voltage sensor configured to measure the voltage of the welding-type power.

6. The welding-type power supply as defined in claim 1, wherein the control circuitry is configured to compare the current of the welding-type power to the threshold output current using an analog comparator or an analog-to-digital converter circuit.

7. The welding-type power supply as defined in claim 1, wherein the control circuitry is configured to, while the boost converter circuit is enabled, control the boost converter circuit to operate at at least 95% of an energy capacity of the boost converter circuit.

8. A welding-type power supply, comprising:
a boost converter circuit configured to increase a DC supply voltage to supply an intermediate voltage to an intermediate DC voltage bus;
a buck converter circuit configured to convert the intermediate voltage supplied by the intermediate DC voltage bus to output welding-type power;
a boost bypass circuit configured to selectively bypass the boost converter circuit by coupling the DC supply voltage to the intermediate DC voltage bus; and
control circuitry configured to:
control the buck converter circuit to convert power from the intermediate DC voltage bus to the welding-type power;
determine a threshold output voltage based on the DC supply voltage;
in response to determining that a voltage of the welding-type power is greater than the threshold output voltage, control the boost bypass circuit to enable the boost converter circuit; and
in response to at least one of determining that the current of the welding-type power is more at least a target welding-type current or determining that the voltage of the welding-type power is less than the threshold output voltage, control the boost bypass circuit to bypass the boost converter circuit.

9. The welding-type power supply as defined in claim 8, wherein the boost bypass circuit comprises a switching device configured to selectively couple the DC supply voltage to the intermediate DC voltage bus.

10. The welding-type power supply as defined in claim 8, wherein the control circuitry is configured to control the buck converter circuit to convert power from the intermediate DC voltage bus to the welding-type power based on at least one of a voltage setpoint or a current setpoint;
or wherein the control circuitry is configured to determine the threshold output voltage based on reducing a different between the DC supply voltage and a predetermined voltage offset, or wherein the control circuitry is configured to wait until the intermediate voltage at the intermediate DC voltage bus has decreased below the DC supply voltage before controlling the boost bypass circuit to bypass the boost converter circuit.

11. The welding-type power supply as defined in claim 8, wherein the welding-type power supply is configured to receive the DC supply voltage from an energy storage device.

12. The welding-type power supply as defined in claim 8, wherein the control circuitry is configured to disable the boost converter circuit when the boost bypass circuit is controlled to bypass the boost converter circuit.

13. The welding-type power supply as defined in claim 8, further comprising a current sensor configured to measure the current of the welding-type power or further comprising a voltage sensor configured to measure the voltage of the welding-type power.

14. The welding-type power supply as defined in claim 8, further comprising a voltage sensor configured to measure the DC supply voltage.

15. The welding-type power supply as defined in claim 8, wherein the control circuitry is configured to compare the voltage of the welding-type power to the threshold output voltage using an analog comparator or an analog-to-digital converter circuit or
wherein the control circuitry is configured to, while the boost converter circuit is enabled, control the boost converter circuit to operate at at least 95% of an energy capacity of the boost converter circuit.
